# EUROPÄISCHE PATENTANMELDUNG

(11) **EP 4 501 445 A1**
(43) Veröffentlichungstag der Anmeldung: **05.02.2025**
(21) Anmeldenummer: 23189794.3
(22) Anmeldetag: 04.08.2023
(51) Int. Cl.: B01J 19/12

(54) **VORRICHTUNG ZUR BESTIMMUNG VON OPTIMALEN REAKTIONSPARAMETERN PHOTOCHEMISCHER REAKTIONEN IN PHOTOREAKTIVEN SUBSTANZPROBEN UND EIN VERFAHREN ZUM BETRIEB DER VORRICHTUNG**

(71) Anmelder: Peschl Ultraviolet GmbH, 55130 Mainz (DE)
(72) Erfinder: Peschi, Alxenader, 55130 Mainz (DE)
(74) Vertreter: mepat Patentanwälte

(57) **Zusammenfassung**

Die vorliegende Erfindung bezieht sich auf eine Vorrichtung (1) zur Bestimmung von optimalen Reaktionsparametern photochemischer Reaktionen in photoreaktiven Substanzproben und ein Verfahren zum Betreiben derselben. Sie hat einen Aufnahmebehälter (20) mit einer Haltervorrichtung, die eine Anordnung aus Aufnahmeöffnungen (21, 21') für Küvetten (4) aufweist, und eine ersten Temperiereinrichtung, die dazu ausgebildet ist, die in den Aufnahmeöffnungen (21, 21') des Aufnahmebehälters (20) anordenbaren Küvetten (4) auf eine vorbestimmte erste Temperatur zu temperieren, und weiter ein Lichtmodul (30) mit einer Anordnung aus lichtemittierenden Halbleiterbauelementen (31), die dazu ausgebildet ist, die Küvetten (4) zu bestrahlen, und eine zweite Temperiereinrichtung zum Temperieren der lichtemittierenden Halbleiterbauelemente (31) auf eine vorbestimmte zweite Temperatur. Außerdem hat sie eine Steuerungseinheit (10), die mit der zweiten Temperiereinrichtung verbunden ist. Der Aufnahmebehälter (20) und das Lichtmodul (30) sind derart zueinander angeordnet, dass jede Aufnahmeöffnung (21, 21') aus der Anordnung der Aufnahmeöffnungen (21, 21') mit einem der lichtemittierenden Halbleiterbauelemente (31) aus der Anordnung der lichtemittierenden Halbleiterbauelementen (31) korrespondiert, sodass von jedem lichtemittierenden Halbleiterbauelement (31) emittiertes Licht durch die korrespondierende Aufnahmeöffnung (21, 21') verläuft.

## Beschreibung

Die Erfindung betrifft eine Vorrichtung zur Bestimmung von optimalen Reaktionsparametern photochemischer Reaktionen in photoreaktiven Substanzproben und ein Verfahren zum Betrieb der Vorrichtung.

Für die Durchführung photochemischer Reaktionen ist die Analyse zur Erfassung, welche Wellenlänge von dem jeweiligen Reaktionsgemisch absorbiert wird und letztlich photochemisch relevant ist, hilfreich, und auch, um den Einfluss von Temperaturen auf den Reaktionsprozess zu verstehen. Bei einigen photochemischen Reaktionen werden mehrphasige Reaktionsgemische photochemisch abreagiert, wie z. B. bei der Photokatalyse, die eine gleichmäßige Durchmischung erfordern. Die Menge des verfügbaren Ausgangsmaterials für eine Analyse ist häufig begrenzt, vor allem aus Gründen einer geringen Produktverfügbarkeit oder hoher Materialkosten.

Ausgehend hiervon ist es Aufgabe der vorliegenden Erfindung, eine Vorrichtung zur Bestimmung von optimalen Reaktionsparametern einer photochemischen Reaktion mehrerer photoreaktiven Substanzproben unter jeweils vergleichbaren Bedingungen bereitzustellen.

Diese Aufgabe wird durch eine Vorrichtung mit den Merkmalen des Anspruchs 1 gelöst.

Die weitere Aufgabe, ein Analyseverfahren für photoreaktive Substanzproben während der Durchführung einer photochemischen Reaktion unter vergleichbaren Bedingungen, wird durch das Verfahren mit den Merkmalen des unabhängigen Anspruchs 13 gelöst.

Weiterbildungen der Vorrichtung und des Verfahrens sind in den jeweiligen Unteransprüchen ausgeführt.

Die erfindungsgemäße Vorrichtung zur Bestimmung von optimalen Reaktionsparametern photochemischer Reaktionen in photoreaktiven Substanzproben weist nach einer ersten Ausführungsform einen Aufnahmebehälter mit einer Haltervorrichtung auf, die eine Anordnung aus Aufnahmeöffnungen für Küvetten hat. Und sie verfügt über eine erste Temperiereinrichtung, die dazu ausgebildet ist, die Küvetten, die in den Aufnahmeöffnungen des Aufnahmebehälters bei der Durchführung einer Analyse angeordnet werden, auf eine vorbestimmte erste Temperatur zu temperieren. Weiter weist die Vorrichtung ein Lichtmodul mit einer Anordnung aus lichtemittierenden Halbleiterbauelementen auf. Diese Anordnung ist dazu ausgebildet und vorgesehen, die Küvetten zu bestrahlen. Schließlich umfasst sie eine zweite Temperiereinrichtung zum Temperieren der lichtemittierenden Halbleiterbauelemente auf eine vorbestimmte zweite Temperatur, sowie eine Steuerungseinheit der lichtemittierenden Halbleiterbauelemente, die zumindest mit der zweiten Temperiereinrichtung verbunden ist. Der Aufnahmebehälter und das Lichtmodul sind derart zueinander angeordnet, dass jede Aufnahmeöffnung aus der Anordnung der Aufnahmeöffnungen mit einem der lichtemittierenden Halbleiterbauelemente aus der Anordnung der lichtemittierenden Halbleiterbauelementen korrespondiert, sodass von jedem lichtemittierenden Halbleiterbauelement emittiertes Licht durch die korrespondierende Aufnahmeöffnung verläuft.

Unter "Bestimmung von optimalen Reaktionsparametern photochemischer Reaktionen in photoreaktiven Substanzproben" wird das Testen bzw. Screening verstanden, mit dem bei mehreren Substanzproben, die zumindest eine photoreaktive Substanz enthalten, mittels Einwirkung von Licht aus dem UV- oder sichtbarem Spektrum photochemische Reaktionen ausgelöst werden können. Der Begriff "photoreaktiv" soll sämtliche durch Photonen induzierte oder assistierte chemische Reaktionen umfassen, d. h. nicht nur die eigentlichen photochemischen Reaktionen, bei der Moleküle durch Absorption von Photonen in einen angeregten Zustand übergehen, der eine chemische Reaktion auslöst, sondern auch katalytische Photoreaktionen, photoinduzierte und photoassistierte katalytische Reaktionen.

Unter "Küvetten" wird hierbei jede Art von Phiolen oder Fläschchen verstanden, die zur Aufnahme photoreaktiver Substanzen geeignet sind und üblicherweise ein Fassungsvermögen in einem Bereich von 0,5 ml bis 10 ml haben, die aber durchaus auch größer oder kleiner ausgeführt sein können. Die Küvetten sind aus einem Material, das für die Wellenlängen der von dem Lichtmodul emittierten Strahlung transparent ist.

"Lichtemittierende Halbleiterbauelemente" können alle Arten von LEDs (light emitting diodes) oder anderen Bauelementen sein, die in der Lage sind, Licht mit Wellenlängen in einem Bereich von ultraviolett bis infrarot auszusenden. LEDs meint hierin also alle solchen in Frage kommenden "LEDs".

Die "erste Temperatur" entspricht hierbei der Temperatur, die die Substanzprobe in der Küvette während des Betriebs der Vorrichtung während des Screenings aufweisen soll. Die "zweite Temperatur" entspricht dabei einer für die Dioden vorgesehenen Betriebstemperatur, im Folgenden kurz Dioden-Temperatur genannt, die sich in der Regel von der ersten Temperatur unterscheidet. Die erste und zweite Temperatur kann hierbei in einem vorbestimmten Bereich mit entsprechenden Toleranzgrenzen liegen. Der Temperaturbereich für die erste Temperatur richtet sich nach der jeweils untersuchten photochemischen Reaktion, bzw. nach den chemischen Reaktionen, die durch Photonen induziert oder assistiert werden, da die eigentliche photochemische Reaktion, bei der Moleküle durch Absorption von Photonen in einen angeregten Zustand übergehen, nahezu temperaturunabhängig abläuft. Der Temperaturbereich für die zweite Temperatur bzw. Dioden-Temperatur erstreckt sich von 0 °C bis +60 °C, ggf. bis +80 °C, liegt vorzugsweise aber bei +20 °C bis +40 °C, um temperaturabhängige Leistungsveränderungen der Dioden zu vermeiden.

Vorteilhaft können mit der erfindungsgemäßen Vorrichtung durch die beiden Temperiereinrichtungen die Küvetten temperiert werden, ohne dass die LEDs durch Kondensation, Vereisung oder Übertemperatur beeinträchtigt werden. Dazu kann die Steuerungseinheit vorsehen, in Abhängigkeit der Substanzproben-Temperatur die zweite Temperiereinrichtung derart anzusteuern, dass die Dioden-Temperatur auf ihrem vorbestimmten Wert gehalten wird. Mit der erfindungsgemäßen Vorrichtung können damit photochemische Grundlagenuntersuchungen für Forschung und Entwicklung in Industrie und Wissenschaft materialsparend und kostengünstig realisiert werden, weil mehrere Bestrahlungsexperimente parallel und gleichzeitig mit sehr kleinen Probenmengen durchgeführt werden können, wobei die LEDs mit der zweiten Temperiereinrichtung thermisch von dem Aufnahmebehälter mit den Küvetten entkoppelt werden. Damit wird vorteilhaft ein bei andauerndem Betrieb auftretender Temperaturdrift der lichtemittierenden Halbleiterelemente verhindert bzw. gesenkt, vorteilhaft auf maximal 0,6 °C, der ansonsten zu einer Änderung bzw. Verringerung der Lichtintensität und damit zu einer Beeinträchtigung akkurater Messungen führen würde.

Nach einer weiteren Ausführungsform der erfindungsgemäßen Vorrichtung weist das Lichtmodul zumindest eine Fluidleitung zur Durchströmung mit einem Temperierfluid auf, das in einem Temperierkreislauf geführt wird, der die zweite Temperiereinrichtung bereitstellt. Die Fluidleitung kann dabei ein Temperierkanal, ein Schlauch oder auch ein Rohr sein. Die genannten Fluidleitungen können in dem Gehäuse integriert sein oder als vom Gehäuse getrennte Bauteile teilweise darin verlegt sein. Damit wird eine Durchströmung des Lichtmoduls mit Temperierfluid erreicht und eine direkte Temperierung erzeugt.

Nach einer alternativen Ausführungsform der erfindungsgemäßen Vorrichtung ist das Lichtmodul an seiner von dem Aufnahmebehälter abgewandten Seite mit einer Kühlplatte verbunden, die die zweite Temperiereinrichtung bereitstellt. Das Lichtmodul weist dazu zumindest eine thermische Schnittstelle aus einem oder mehreren wärmeleitfähigen Materialien zwischen den lichtemittierenden Halbleiterbauteilen und der Kühlplatte auf. Ferner kann auch die Kühlplatte mit einem Temperierkanal zur Durchströmung mit einem Temperierfluid ausgebildet sein.

Nach noch einer weiteren Ausführungsform der erfindungsgemäßen Vorrichtung begrenzt das Lichtmodul einen Emissionsraum, in dem die Anordnung der LEDs angeordnet ist, und weist zumindest eine mit dem Emissionsraum optisch verbundene Öffnung auf, die dem Aufnahmebehälter zugewandt ist, wobei die Öffnung abdichtend durch eine für das Licht der LEDs transparente Scheibe geschlossen ist, wobei die LEDs an einer Fläche des Emissionsraums angeordnet sind, die der transparenten Scheibe gegenüber liegt. Es versteht sich, dass das Gehäuse anstelle einer gemeinsamen Lichtaustrittsöffnung für alle LEDs für jedes lichtemittierende Halbleiterbauelement eine eigene zugeordnete Öffnung aufweisen kann, die jeweils durch eine transparente Scheibe verschlossen wird, wobei die Anordnung der Öffnungen der Anordnung der LEDs entspricht. Der Emissionsraum ist zur Durchströmung mit dem Temperierfluid mit der zumindest einen Fluidleitung bzw. dem Temperierkanal verbunden, wobei die lichtemittierenden Halbleiterbauteile das Temperierfluid direkt kontaktieren. Dazu wird ein elektrisch nicht-leitendes Temperierfluid eingesetzt. Hierdurch kann ein Temperierfluidkreislauf für die direkte Temperierung ermöglicht werden. Unter der "optischen Verbindung" des Emissionsraums mit der zumindest einen Öffnung ist zu verstehen, dass entweder direkter "Sichtkontakt" zwischen den LEDs im Emissionraum und den Öffnungen besteht, oder das Lichtmodul optische Lenk- bzw. Leitelemente, z. B. Lichtleitfasern aufweist, durch die das von den LEDs emittierte Licht zu den Öffnungen gelangt.

Nach noch einer weiteren Ausführungsform der erfindungsgemäßen Vorrichtung ist die erste Temperiereinrichtung des Aufnahmebehälters zumindest ein in dem Aufnahmebehälter angeordnetes Temperierelement. Dieses Temperierelement kann ein Heiz- und/- oder Kühlelement sein, das mit den Küvetten mittels einer thermischen Schnittstelle wie beispielsweise einem Temperierbad in wärmeleitendem Kontakt steht. Alternativ kann die erste Temperiereinrichtung eine separate Wärmequelle oder Wärmesenke aufweisen, die mit dem Aufnahmebehälter einen Temperierkreislauf mit einem zirkulierenden Temperierfluid bildet, sodass sich die Küvetten im Aufnahmebehälter z. B. in einem strömenden Temperierbad befinden. Dabei ist die erste Temperiereinrichtung dazu ausgebildet, die Küvetten in den Aufnahmeöffnungen des Aufnahmebehälters auf die vorbestimmte erste oder Substanzproben-Temperatur, die in einem Temperaturbereich von -25 °C bis +180 °C, bevorzugt in einem Temperaturbereich von -20 °C bis +150 °C liegt, zu temperieren. Vorteilhaft können die Küvetten für eine optimale Reaktionstemperatur temperiert werden, ohne auf die Dioden-Temperatur Rücksicht nehmen zu müssen, da die durch die zweite Temperiereinrichtung erreichte thermische Entkopplung eine Beeinträchtigung der LEDs durch Kondensation, Vereisung oder Übertemperatur verhindert.

Die erfindungsgemäße Vorrichtung kann nach einer bevorzugten Ausführungsform vorsehen, dass der Aufnahmebehälter über dem Lichtmodul angeordnet ist. Die Küvetten können so von unten bestrahlt werden und sind von oben einfach zugänglich, zum Einsetzen und Herausnehmen der Küvetten in die entsprechenden Aufnahmeöffnungen, oder auch zur Probennahme während der Reaktion.

Nach einer alternativen Ausführungsform der erfindungsgemäßen Vorrichtung kann das Lichtmodul auch über dem Aufnahmebehälter angeordnet sein. Diese Alternative bietet die Möglichkeit, z. B. eine Rührplattenvorrichtung unter dem Aufnahmebehälter anzuordnen, sodass in jeder Küvette ein Magnetrührer eingesetzt werden kann, um die jeweils dort vorliegenden Substanzprobe zu rühren.

In beiden Fällen kann nach einer Weiterbildung zwischen dem Aufnahmebehälter und dem Lichtmodul eine thermisch isolierende Trennplatte vorgesehen sein, um die thermische Entkopplung von Aufnahmebehälter und Lichtmodul zu unterstützen. Damit das Licht aus dem Lichtmodul in den Aufnahmebehälter gelangen kann, kann die Trennplatte dabei aus transparentem Material bestehen oder Durchtrittsöffnungen aufweisen, deren Anordnung der der LEDs bzw. der Aufnahmeöffnungen entspricht und die mit einer transparenten Scheibe geschlossen sein können.

Nach noch einer weiteren Ausführungsform der erfindungsgemäßen Vorrichtung emittieren die Halbleiterbauelemente Licht mit Wellenlängen in einem Bereich von 250 nm bis 650 nm, d. h. vom ultravioletten bis in den sichtbaren "roten" Bereich. Zumindest zwei lichtemittierende Halbleiterbauelemente emittieren Licht der gleichen Wellenlänge, sodass in einem Fall auch alle lichtemittierende Halbleiterbauelemente Licht der gleichen Wellenlänge abstrahlen. Alternativ kann auch vorgesehen sein, dass jedes lichtemittierende Halbleiterbauelement Licht unterschiedlicher Wellenlänge emittiert. So können vorteilhaft die Küvetten mit der jeweils gewünschten Wellenlänge bestrahlt werden. Testbestrahlungen mit unterschiedlichen Wellenlängen sind außerdem möglich.

Ferner kann die Lichtintensität jedes lichtemittierenden Halbleiterbauelements durch die Steuerungseinheit eingestellt werden. So kann die Intensität jeder Wellenlänge zweier oder mehrerer lichtemittierender Halbleiterbauelemente mit der Steuerungseinheit aufeinander abgestimmt werden, sodass auch bei den von der Wellenlänge abhängigen unterschiedlichen Wirkungsgraden der LEDs die Bestrahlungsintensität angeglichen werden kann. Der Wirkungsgrad bezeichnet das Verhältnis der Strahlungsleistung zur aufgenommenen Leistung und variiert je nach Wellenlänge derzeit zwischen 10 % (grün, 530 bis 540 nm), 20 % (blau, 440 nm) und 70 % (rot, ab 650 nm). Der Wirkungsgrad von LEDs im UV-Wellenlängenbereich liegt derzeit bei maximal 10 %. Die Erfindung beschränkt sich allerdings nicht auf LEDs mit den genannten Wirkungsgraden, da auf diesem Gebiet ständige Weiterentwicklungen zu höheren Wirkungsgraden führt, sodass eine erfindungsgemäße Vorrichtung selbstverständlich auch in Zukunft entwickelte LEDs mit höheren Wirkungsgraden aufweisen kann. Durch Steuerung der Leistungsaufnahme kann die Bestrahlungsintensität der LEDs unterschiedlicher Wellenlängen angepasst werden.

Die Steuerungseinheit ermöglicht es auch, dass jedes lichtemittierende Halbleiterbauelement einzeln über ein Touchpanel an der Steuerungseinheit gesteuert und in seiner Intensität oder Lichtabgabe angepasst, wie z. B. gedimmt werden kann. Darüber hinaus ist die gleichzeitige Ansteuerung aller lichtemittierenden Halbleiterbauelemente möglich.

Nach einer noch weiteren Ausführungsform der erfindungsgemäßen Vorrichtung weist das Lichtmodul ein Gehäuse und eine Kassette auf, in der die Anordnung aus lichtemittierenden Halbleiterbauelementen angeordnet ist. Die Kassette ist lösbar in dem Gehäuse angeordnet und kann einen Griff aufweisen. Diese Kassette macht es leicht, unterschiedliche Anordnungen aus lichtemittierenden Halbleiterbauelementen auszutauschen.

Die zweite Temperiereinrichtung, die die LEDs von den Küvetten thermisch entkoppelt, wodurch die vorbestimmte zweite oder auch Dioden-Temperatur leichter zu halten ist, kann in eine solche Kassette integriert sein oder in das Gehäuse des Lichtmoduls als Begrenzung der Aufnahmeöffnung für die Kassette bzw. des Kassettenfachs.

Wenn die zweite Temperiereinrichtung zur direkten Temperierung der lichtemittierenden Halbleiterlemente vorgesehen ist, wird sie jedenfalls in der Kassette integriert vorliegen, die dann entsprechende Anschlüsse zur Verbindung der Fluidleitungen mit dem Temperierkreislauf aufweist.

So weist diese Kassette einer bevorzugten Weiterbildung den zumindest einen Fluidkanal auf, der mit dem Emissionsraum verbunden ist, in dem die Anordnung der lichtemittierenden Halbleiterbauelemente angeordnet ist. Alternativ oder zusätzlich kann eine Verbindung der lichtemittierenden Halbleiterbauelemente mit einem Anschlusselement an dem Gehäuse durch eine lösbare Steckerverbindung zwischen der Kassette und dem Gehäuse bereitgestellt werden.

Eine zweite Temperiereinrichtung zur indirekten Temperierung kann wahlweise in der Kassette oder im Gehäuse des Lichtmoduls angrenzend an das Kassettenfach ausgebildet sein. Die erfindungsgemäße Vorrichtung kann daher mehrere Anordnungen aus lichtemittierenden Halbleiterelementen bzw. mehrere Kassetten mit jeweils einer Anordnung aus lichtemittierenden Halbleiterelementen aufweisen, die wechselweise in dem Lichtmodul eingesetzt werden können. Bevorzugt kann eine Kassette lichtemittierende Halbleiterbauelemente aufweisen, die allesamt Licht bzw. Strahlung der gleichen Wellenlänge emittieren, und in einer anderen Kassette (Austausch-Kassette) kann jedes lichtemittierende Halbleiterbauelement eine unterschiedliche Wellenlänge emittieren.

Die Anordnung aus lichtemittierenden Halbleiterbauelementen kann bspw. ein mal drei, also drei, oder fünf mal fünf, also 25, oder drei mal drei, also neun, lichtemittierende Halbleiterbauelemente aufweisen, die bei Einsatz der Austausch-Kassette gleichzeitig Licht bzw. Strahlung mit neun verschiedenen Wellenlängen abstrahlen können.

Ferner weisen in noch einer weiteren Ausführungsform der erfindungsgemäßen Vorrichtung der Aufnahmebehälter und das Lichtmodul jeweils zumindest einen Temperatursensor auf, der mit der Steuerungseinheit operativ gekoppelt ist, die ferner mit der ersten Temperiereinrichtung des Aufnahmebehälters verbunden ist. Die Temperatursensoren machen eine Überwachung, Steuerung und schlussendlich Regelung der Temperiereinrichtungen möglich.

Die erfindungsgemäße Vorrichtung weist nach noch einer weiteren Ausführungsform eine Rüttelplatte auf, auf der der Aufnahmebehälter und das Lichtmodul angeordnet sind, und die mit der Steuerungseinheit betätigt werden kann. Die Rüttelplatte ist Teil einer Rüttelvorrichtung. Mit der Rüttelplatte können die Anordnung aus Aufnahmebehälter und Lichtmodul durch die Steuerungseinheit für eine vorbestimmte Zeit und Frequenz oszillierend gerüttelt werden. Dies ermöglicht je nach zu testender Substanz, vor allem bei viskosen und zur Phasentrennung neigenden Substanzen, eine gute Durchmischung und eine gleichmäßige Bestrahlung der Substanzproben. Die oszillierende Bewegung der Rüttelplatte verhindert unerwünschte Scherkräfte auf die Substanz.

Ferner weist der Aufnahmebehälter nach einer noch weiteren Ausführungsform einen Deckel auf, der zumindest teilweise geschlossen ist. Ein vollständig geschlossener Deckel ist sinnvoll, um z. B. das Austreten von Temperierfluid bei aktivierter Rüttelplatte zu verhindern. Außerdem bietet ein vollständig geschlossener Deckel gerade bei der Anordnung, bei der der Aufnahmebehälter auf dem Lichtmodul sitzt, Schutz vor austretender Strahlung, die von den lichtemittierenden Halbleiterbauelementen emittiert die Küvetten ohne Absorption passiert. Alternativ kann der Deckel auch Durchgangsöffnungen zur einfachen Probenentnahme aus den Küvetten aufweisen.

Die Erfindung betrifft ferner ein Verfahren zum Betreiben einer Vorrichtung zur Bestimmung von optimalen Reaktionsparametern einer photochemischen Reaktion in photoreaktiven Substanzproben unter Verwendung einer erfindungsgemäßen Vorrichtung. Diese weist zumindest einen Aufnahmebehälter mit einer Haltervorrichtung auf, die eine Anordnung aus Aufnahmeöffnungen für Küvetten enthält. Der Aufnahmebehälter hat weiter eine erste Temperiereinrichtung, die dazu ausgebildet ist, die in den Aufnahmeöffnungen des Aufnahmebehälters anordenbaren Küvetten auf eine vorbestimmte erste Temperatur zu temperieren. Die Vorrichtung weist ferner ein Lichtmodul mit einer Anordnung aus lichtemittierenden Halbleiterbauelementen auf, die dazu ausgebildet sind, die in den Aufnahmeöffnungen des Aufnahmebehälters anordenbaren Küvetten zu bestrahlen, und sie hat eine zweiten Temperiereinrichtung zum Temperieren der LEDs auf eine vorbestimmte zweite Temperatur. Ergänzend weist sie eine Steuerungseinheit der LEDs auf, die zumindest mit der zweiten Temperiereinrichtung verbunden ist.

Das erfindungsgemäße Verfahren umfasst in einer ersten Ausführungsform die folgenden Schritte:
- Einsetzen von mit Proben photoreaktiver Substanzen befüllten Küvetten in die Aufnahmen der Haltervorrichtung des Aufnahmebehälters, wobei die Befüllung der Küvetten mit den Proben photoreaktiver Substanzen nach dem Einsetzen oder auch zuvor erfolgen kann;
- Temperieren der Küvetten mittels der ersten Temperiereinrichtung auf die vorbestimmte erste Temperatur,
- Bestrahlen der Küvetten und damit der Proben photoreaktiver Substanzen durch die lichtemittierenden Halbleiterelemente des Lichtmoduls,
- dabei in Abhängigkeit der vorbestimmten Temperatur Temperieren der lichtemittierenden Halbleiterelemente mit der zweiten Temperiereinrichtung auf die vorbestimmte zweite Temperatur.

Die lichtemittierenden Halbleiterbauelemente können LEDs sein.

Die beiden Temperiereinrichtungen gestatten eine präzise Temperierung der Küvetten zwischen -25 °C und +180 °C, bevorzugt zwischen -20 °C und +150 °C, ohne dass die Funktion oder Leistung der lichtemittierenden Halbleiterbauelemente wie etwa LEDs beeinträchtigt wird, und damit korrekte Messergebnisse. Zur effektiven Ermittlung der optimalen Reaktionsparameter können dabei mehrere Proben gleichzeitig getestet werden. Dabei kann beispielsweise jeweils ein Reaktionsparameter variiert werden, wobei die übrigen Bedingungen aber für alle Proben gleich gehalten werden können. So können etwa gleichzeitig mehrere Substanzproben gleicher Zusammensetzung in einem Versuch jeweils mit einer anderen Wellenlänge bestrahlt werden.

Nach noch einer weiteren Ausführungsform des erfindungsgemäßen Verfahrens steuert die Steuerungseinheit die LEDs, die Strahlung unterschiedlicher Wellenlängen in dem Bereich von 250 nm bis 650 nm emittieren, derart, dass durch Anpassung der Aufnahmeleistung der LEDs in Abhängigkeit eines wellenlängenabhängigen Wirkungsgrads eine gleiche Bestrahlungsintensität eingestellt wird.

Nach noch einer weiteren Ausführungsform sieht das erfindungsgemäße Verfahren vor, dass auch die Rüttelfrequenz und Rütteldauer der Rüttelplatte mittels der Steuerungseinheit gesteuert wird. Um die Substanzproben gut durchmischen zu können, kann mittels der Rüttelplatte oszillierend gerüttelt werden.

Vorteilhaft ermöglicht es das erfindungsgemäße Verfahren, die optimale Wellenlänge für einen definierten Reaktionsprozess der zu untersuchenden photoreaktiven Substanz zu ermitteln, indem zuerst eine Kassette mit der Anordnung der LEDs mit unterschiedlichen Wellenlängen im Lichtmodul eingesetzt wird. Im Weiteren kann die zuerst verwendete Kassette mit der Anordnung der LEDs mit unterschiedlichen Wellenlängen in einem nachfolgenden Schritt gegen eine Kassette mit lichtemittierenden Halbleiterbauelementen, die alle Strahlung der gleichen Wellenlänge emittieren, ausgetauscht werden, sodass weitere Untersuchungen wie z. B. Konzentrationsbestimmungen durchgeführt werden können.

Weitere Ausführungsformen der Vorrichtung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine perspektivische Ansicht der erfindungsgemäßen Vorrichtung mit Rüttelvorrichtung, und
- **Fig. 2**: eine schematische Schnittansicht der erfindungsgemäßen Vorrichtung,
- **Fig. 3**: eine perspektivische Ansicht der erfindungsgemäßen Vorrichtung nach einer alternativen Ausführungsform mit eingezeichneten Schnittebenen I-I und II-II,
- **Fig. 4**: eine perspektivische Teilexplosionsansicht der erfindungsgemäßen Vorrichtung aus Fig. 3,
- **Fig. 5**: eine perspektivische Ansicht einer Lichtmodul-Kassette der erfindungsgemäßen Vorrichtung aus Fig. 3,
- **Fig. 6**: eine perspektivische Teilexplosionsansicht der Lichtmodul-Kassette aus Fig. 5,
- **Fig. 7**: eine Schnittansicht der erfindungsgemäßen Vorrichtung entlang der Schnittebene I-I aus Fig. 3,
- **Fig. 8**: eine Schnittansicht der erfindungsgemäßen Vorrichtung entlang der Schnittebene II-II aus Fig. 3
- **Fig. 9**: eine perspektivische Detailrückansicht des Lichtmoduls,
- **Fig. 10**: eine perspektivische Ansicht der erfindungsgemäßen Vorrichtung aus Fig. 3 mit externer Wärmequelle/Wärmesenke.

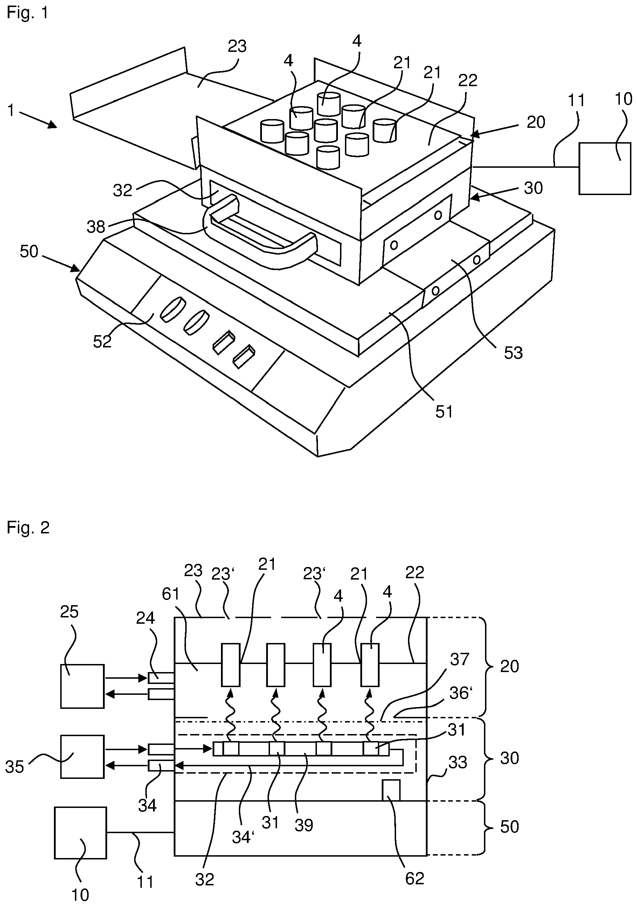

In **Fig. 1 und 2** zeigt die erfindungsgemäße Vorrichtung 1 zur Optimierung von Reaktionsparametern einer photochemischen Reaktion bzw. Verbesserung photochemischer Reaktionen in photoreaktiven Substanzproben einen Aufnahmebehälter 20 und ein Lichtmodul 30. In dem Aufnahmebehälter 20 ist eine Platte 22 als Haltervorrichtung montiert, die neun Aufnahmeöffnungen 21 hat. Diese Aufnahmeöffnungen 21 sind äquidistant mit drei mal drei Stück zueinander angeordnet und derart ausgebildet, dass sie Küvetten 4 haltern können, in die photoreaktive Substanzproben eingefüllt werden können.

Die Küvetten 4 dort können - figurativ ist das nicht zu sehen - je 0,5 ml enthalten, bei anderen Ausführungen der erfindungsgemäße Vorrichtung 1 und entsprechend anderer Größen oder Ausführungsformen der Küvetten können diese aber auch mehr oder weniger Milliliter enthalten, etwa Volumina von 10 ml.

Der Aufnahmebehälter 20 aus **Fig. 1** weist einen Deckel 23 auf, der zur Anordnung und Entnahme der Küvetten 4 in den Aufnahmeöffnungen 21 aufgeklappt werden kann - er ist auch in der aufgeklappten Position gezeigt und kann zum Schutz der Küvetten 4 geschlossen werden. In **Fig. 1** ist die Fläche des Deckels 23 vollständig geschlossen.

In **Fig. 2** weist der Deckel 23 über den Küvetten 4 Durchgangsöffnungen 23' auf, die bei geschlossenem Deckel 23 mit den Aufnahmeöffnungen 21 fluchten, sodass der Inhalt der Küvetten 4 bspw. mit einer Pipette erreichbar ist.

Unterhalb des Aufnahmebehälters 20 ist das Lichtmodul 30 angeordnet und fest mit dem Aufnahmebehälter 20 verbunden, der einen transparenten Boden oder korrespondierend zu den Aufnahmeöffnungen 21 angeordnete Durchtrittsöffnungen aufweist, die mit transparenten Scheiben geschlossen sind. Das Lichtmodul 30 weist ein Gehäuse 33 auf, das auf einer Rüttelplatte 51 einer Rüttelvorrichtung 50, hier über Winkelplatten 53 mittels Schrauben, fest montiert ist. Die Rüttelvorrichtung 50 weist ferner ein Steuerungsgerät 52 auf, mit dem die Frequenz und die Dauer der Oszillation der Rüttelplatte 51 gesteuert werden kann. Die Frequenz sollte nicht zu hoch gewählt werden; als geeignet haben sich bei einem kreisförmig vibrierenden Plattformschüttler als Rüttelvorrichtung 50 Frequenzen bis maximal 600 U/min erwiesen.

Das Lichtmodul 30 weist hier eine mit dem Gehäuse 33 lösbar verbundene und damit herausziehbare Kassette 32 auf.

**Fig. 1** zeigt einen zusätzlich an der Kassette 32 vorgesehenen bügelförmigen Griff 38. In der Kassette 32 ist, wie **Fig. 2** zeigt, eine Platine bzw. Platte 39 mit einer Anordnung aus LEDs 31 angeordnet, deren Licht auf von unten auf die Platte 22 mit den eingesetzten Küvetten 4 trifft. Das Licht der LEDs 31 ist in **Fig. 2** mit geschwungenen Pfeilen dargestellt. Das Gehäuse 33 des Lichtmoduls 30 weist in dem in **Fig. 2** dargestellten Beispiel zum Durchlass des Lichts eine große Öffnung 36' hin zu dem Aufnahmebehälter 20 auf. Die Öffnung 36' ist mit einer für die Strahlung der LEDs 31 transparenten Scheibe 37 abgedeckt. Alternativ kann zwischen dem Aufnahmebehälter 20 und dem Lichtmodul 30 eine Trennplatte, vorzugsweise aus thermisch isolierendem Material angeordnet sein, die das Gehäuse 33 des Lichtmoduls 30 nach oben abschließt und gleichzeitig den Boden des Aufnahmebehälters 20 bildet und entweder als transparente Scheibe 37 ausgebildet ist oder Durchtrittsöffnungen aufweist, die korrespondierend zu den LEDs 31 bzw. den Aufnahmeöffnungen 21 angeordnet und mit transparenten Scheiben 37 geschlossen sind.

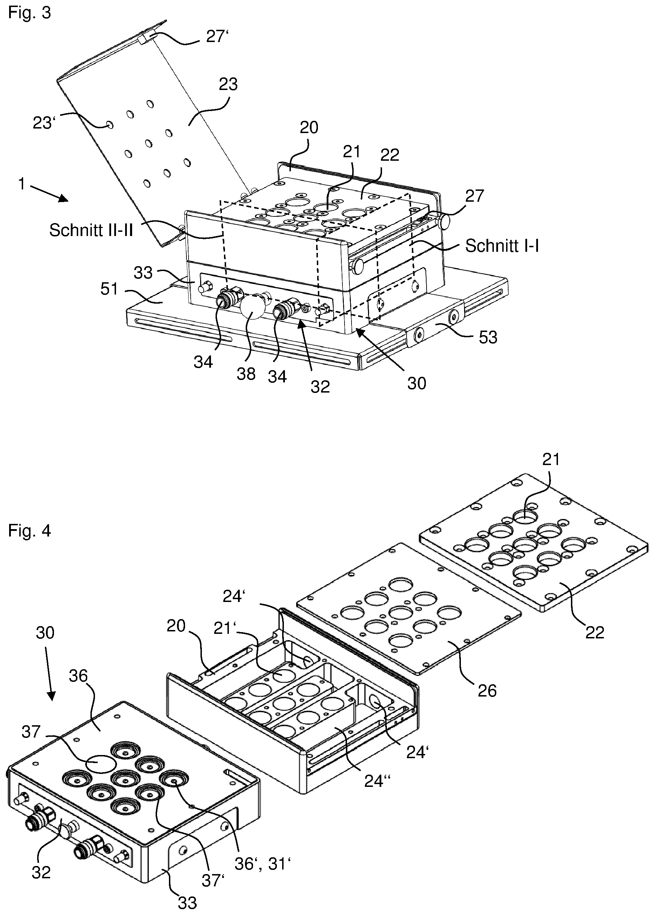

Die Kassette 32 kann mit einem Glas oder einem für die Strahlung der LEDs 31 transparenten Scheibe - in **Fig. 2** nicht gezeigt - abgedeckt sein, sodass die Kassette 32 ein abgeschlossenes Element bildet und die lichtemittierenden Halbleiterbauelemente 31 vor Schmutz geschützt sind. Anstelle einer durchgehenden transparenten Scheibe für alle lichtemittierenden Halbleiterelemente 31 kann das Lichtmodul 30 bzw. die Kassette 32 in der in **Fig. 3 bis 10** dargestellten alternativen Ausführung für jedes lichtemittierende Halbleiterelement eine zugordnete Durchtrittsöffnung mit einer entsprechend transparenten Scheibe aufweisen.

Der Aufnahmebehälter 20 weist eine erste Temperiereinrichtung auf, mit der der Innenraum des Aufnahmebehälters 20 oder die Platte 22 bzw. die Küvetten 4 in einem Temperaturbereich von -25 °C bis +180 °C, beispielsweise -20 °C bis +80 °C temperiert werden können.

In **Fig. 2** ist die erste Temperiereinrichtung als Temperierbad ausgebildet und schematisch mit Zu- und Abfuhrleitungen 24 für ein Temperierfluid zu einer externen Heiz- oder Kühlquelle 25 gezeichnet. Die Küvetten 4 werden in dem Temperierbad von dem Temperierfluid umströmt. Bei der dargestellten Anordnung mit dem Lichtmodul 30 unterhalb dem Aufnahmebehälter 20 ist bei der Auswahl des Temperierfluids für die erste Temperiereinrichtung darauf zu achten, dass das Temperierfluid für die Wellenlängen der im Lichtmodul 30 eingesetzten lichtemittierenden Halbleiterelemente 31 ausreichend transparent ist. Zur Messung einer Substanzproben-Temperatur innerhalb des Aufnahmebehälters 20 hat der Aufnahmebehälter 20 einen Temperatursensor 61, der z. B. an einer Innenwand des Aufnahmebehälters 20 oder an der Platte 22 benachbart zu den Aufnahmeöffnungen 21 angeordnet sein kann.

Das Lichtmodul 20 weist ferner eine zweite Temperiereinrichtung auf, mit der die Kassette 32 und damit die LEDs 31 während des Betriebs temperiert, also gekühlt oder geheizt werden können. In **Fig. 2** ist die zweite Temperiereinrichtung ebenfalls als Temperierbad ausgebildet und schematisch mit Zu- und Abfuhrleitungen 34 für ein weiteres Temperierfluid zu einer externen Kühl- oder Heizquelle 35 gezeichnet.

Generell kann sich das Temperierfluid der zweite Temperiereinrichtung durchaus vom Temperierfluid der ersten Temperiereinrichtung unterscheiden, insbesondere wenn die zweite Temperiereinrichtung zur direkten Temperierung der lichtemittierenden Halbleiterelemente ausgebildet ist. Dann sollte bei der Auswahl des Temperierfluids der zweite Temperiereinrichtung vor allem darauf geachtet werden, dass das Temperierfluid nicht nur transparent für die Wellenlängen der im Lichtmodul eingesetzten lichtemittierenden Halbleiterelemente ist, sondern auch elektrisch nicht-leitend ist. Auch die zweite Temperiereinrichtung weist einen Temperatursensor 62 zur Erfassung einer Dioden-Temperatur auf, der auf der Platine 39 angeordnet wird. In dem Gehäuse 33 bzw. der Kassette 32 ist ein Temperierkanal 34' zur Durchströmung mit einem Temperierfluid gebildet, das in einem Temperierkreislauf mit den Zu- und Abfuhrleitungen 34 geführt wird.

Ferner weist die Vorrichtung 1 eine Steuerungseinheit 10 auf, die hier extern vorliegt, aber auch - figurativ nicht gezeigt - in der Vorrichtung 10 montiert sein kann und mit den wesentlichen Komponenten, die sie steuern soll, nämlich den lichtemittierenden Halbleiterelementen 31, der ersten und zweiten Temperiereinrichtung sowie der Rüttelvorrichtung 50 bzw. deren Steuergerät 52 operativ gekoppelt sein kann. Die hierfür notwendigen elektrischen und elektronischen Verbindungen sind aus Gründen der einfacheren Darstellung nicht konkret figurativ dargestellt und werden durch die Verbindungsleitung 11 dargestellt. Die Steuerungseinheit 10 ermöglicht es, die lichtemittierenden Halbleiterbauelemente 31 einzeln anzusteuern und die Lichtintensität jedes lichtemittierenden Halbleiterbauelements 31 unabhängig voneinander einzustellen.

Die Steuerungseinheit 10 ist ferner dazu ausgebildet, sowohl die erste als auch die zweite Temperiereinrichtung zu steuern. So ist vorgesehen, dass die erste Temperiereinrichtung den Innenraum des Aufnahmebehälters 20 auf eine Substanzproben-Temperatur in einem Bereich von -25 °C bis +180 °C temperiert und in Abhängigkeit der erreichten Substanzproben-Temperatur des Aufnahmebehälters 20 die zweite Temperiereinrichtung des Lichtmoduls 30 derart gesteuert wird, dass die Temperatur der lichtemittierenden Halbleiterelemente 31 gleichbleibend unterhalb einer vorbestimmten Grenztemperatur, der sogenannte Dioden-Temperatur bleibt, die idealerweise in einem Bereich von +20 °C bis +30 °C oder bis +40 °C bleibt.

Erst durch diese thermische Entkopplung ist es möglich, die LEDs 31 mit gleichem Photonenstrom bzw. konstantem Photonenstrom zu betreiben, da ansonsten die Temperierung im Aufnahmebehälter mit zunehmender Betriebsdauer zu einer Temperaturänderung an den LEDs 31 führen würde, der mit einer Änderung der Strahlungsintensität der lichtemittierenden Halbleiterbauelemente 31 verbunden wäre, die zu Verfälschung der Messergebnisse führen könnte. Außerdem kann so die Intensität der lichtemittierenden Halbleiterbauelemente 31 jeder Wellenlänge mit der Steuerungseinheit 10 aufeinander abgestimmt werden, sodass auch bei den von der Wellenlänge abhängigen unterschiedlichen Wirkungsgraden der LEDs 31 die Bestrahlungsintensität angeglichen werden kann. Dazu wird die Leistungsaufnahme der einzelnen LEDs 31 in Abhängigkeit ihres Wirkungsgrads gesteuert, um die Strahlungsleistung LEDs 31 jeweils aneinander anzupassen.

**Figuren 3 bis 10** zeigen eine alternative Ausführungsform der Vorrichtung 1, bei der der Aufnahmebehälter 20 aus einem wärmeleitenden Materialblock mit eingeformten Temperierkanal 24" besteht, der sich mäandrierend zwischen zwei Anschlussöffnungen 24' erstreckt und die erste Temperiereinrichtung bereitstellt. Zwischen den Windungen des Temperierkanals 24" sind im Aufnahmebehälter 20 drei mal drei durchgehende Aufnahmeöffnungen 21' als Haltervorrichtung zur Aufnahme der Küvetten ausgebildet. Durch Anordnung einer Platte 22 wird der Temperierkanal 24" nach oben geschlossen, wobei die Platte 22 drei mal drei Aufnahmeöffnungen 21 aufweist, die bei Anordnung an dem Aufnahmebehälter 20 mit dessen Aufnahmeöffnungen 21' fluchten. Der Aufnahmebehälter 20 kann beispielsweise aus einem Metallblock, z. B. Aluminium, gefertigt sein, in den der Temperierkanal 24" mit den Anschlussöffnungen 24' und die Aufnahmeöffnungen 21' eingefräst sind. Zwischen der Platte 22, die ebenfalls aus Metall, z. B. Aluminium, bestehen kann, und dem Aufnahmebehälter 20 ist eine Dichtungsplatte 26 angeordnet, um den Temperierkanal 24" abzudichten, wobei die Dichtungsplatte 26 auch drei mal drei Ausnehmungen aufweist, die mit den Aufnahmeöffnungen 21 in der Platte 22 und den Aufnahmeöffnungen 21' im Aufnahmebehälter 20 korrespondieren. Der Temperierkanal 24" dient zur Durchleitung eines Temperiermediums, um Wärme über die Metallwandung des Aufnahmebehälters 20 mit den in den Aufnahmeöffnungen 21' aufgenommenen Küvetten bzw. den darin enthaltenen Substanzproben auszutauschen, d. h. zuzuführen oder abzuleiten.

In dem in **Fig. 3 bis 10** gezeigten Beispiel ist an dem Aufnahmebehälter 20 ferner ein Sicherheitsschalter 27 angeordnet, der bei geschlossenem Deckel 23 einen Schaltgeber 27' kontaktiert, um sicherzustellen, dass die Vorrichtung 1 nur bei korrekt geschlossenem Deckel 23 betrieben werden kann.

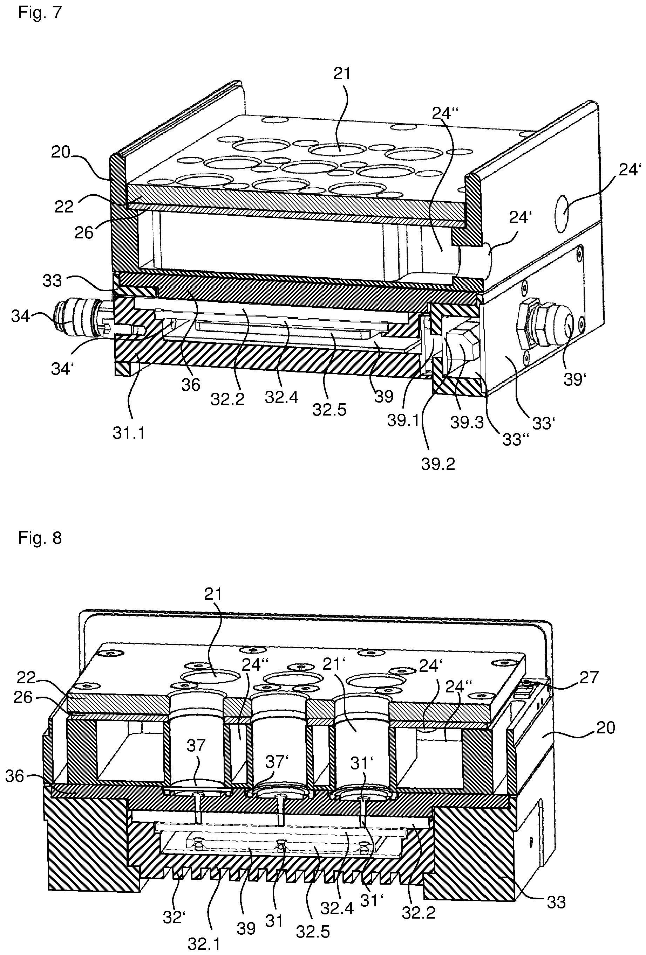

Auch bei dieser Vorrichtung 1 ist der Aufnahmebehälter 20 auf dem Lichtmodul 30 angeordnet. Auf der dem Aufnahmebehälter 20 zugewandten Seite schließt das Gehäuse 33 des Lichtmoduls 30 mit einer Trenn- bzw. Isolatorplatte 36 ab, die aus thermisch isolierendem Material besteht. Die Isolatorplatte 36 weist entsprechend der Anordnung der Aufnahmeöffnungen 21, 21' drei mal drei Durchtrittsöffnungen 36' auf. In diesem Beispiel ist, wie in **Fig. 4** **und** **8** dargestellt, jede Durchtrittsöffnung 36' als Durchtrittsbohrung zur Aufnahme einer Faseroptik 31' aus Lichtleitfasern ausgebildet. Auf der dem Aufnahmebehälter 20 zugewandten Seite ist die Durchtrittsöffnung 36' zu einer Aufnahme aufgeweitet, in der eine transparente Scheibe 37 aus Glas bzw. Quarz mittels O-Dichtring 37' abgedichtet eingesetzt ist, wobei in **Fig. 4** **und** **8** nur eine Scheibe 37 beispielhaft dargestellt ist. Vorteilhaft können mit der Faseroptik 31' die Photonen der jeweiligen LED 31 aus der Kassette 32 in eine Küvette 4 eingeleitet werden, die in der Aufnahmeöffnung 21, 21' aufgenommen auf der Scheibe 37 steht.

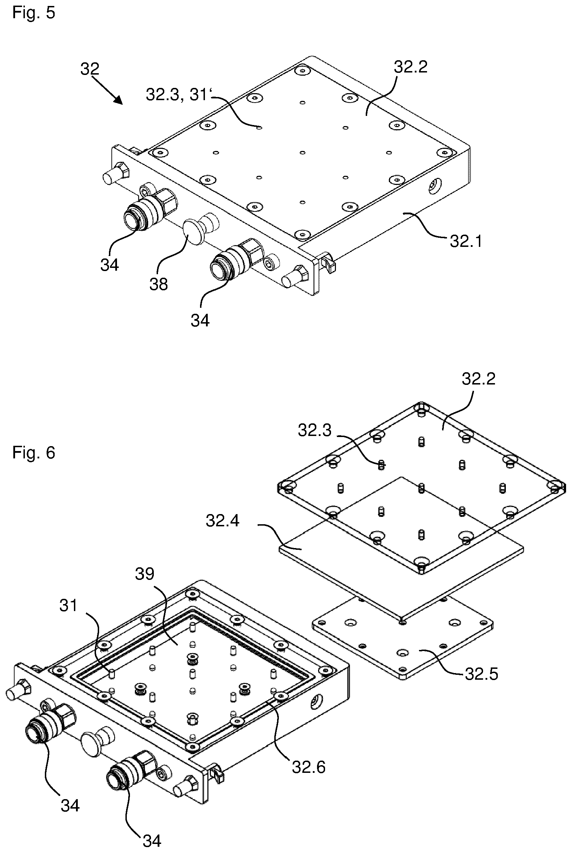

**Fig. 5 und 6** zeigen die Kassette 32 der beispielhaften Vorrichtung 1 aus **Fig. 3 bis 10**. Die Kassette 32 weist ein Kassettengehäuse 32.1 und einen das Kassettengehäuse 32.1 schließenden Kassettendeckel 32.2 auf. Die Kassette 32 ist zur Aufnahme in einem entsprechend ausgebildeten Fach in dem Gehäuse 33 des Lichtmoduls 30 ausgebildet, sodass die Frontseite der Kassette 32, an der der hier als Kugelknopf ausgebildete Griff 38 und die Anschlüsse 34 der zweiten Temperiervorrichtung vorliegen, mit der Frontseite des Gehäuses 33 des Lichtmoduls 30 abschließt. Das Kassettengehäuse 32.1 begrenzt mit dem Kassettendeckel 32.2 einen Emissionsraum, in dem eine Platine 39 mit den drei mal drei LEDs 31 angeordnet ist. Jeweils ein Temperierkanal 34', der in dem Kassettengehäuse 32.2 hier als Ein- bzw. Auslassöffnung ausgebildet ist, verbindet die Anschlüsse 34 mit dem Emissionsraum, sodass ein Temperierfluid zur Temperierung der LEDs 31 durch die Kassette 32 geleitet werden kann. Ferner ist das Fach, das in dem Gehäuse 33 des Lichtmoduls 30 zur Aufnahme der Kassette 32 ausgebildet ist, wie in **Fig. 7 und 8** zu sehen, nach unten offen, sodass zusätzlich von dem Kassettengehäuse 32.1 aufgenommene Wärme an die Umgebung abgegeben werden kann, wobei das Kassettengehäuse 32.1 zur besseren Wärmeableitung an der Unterseite mit Rippen 32' ausgeformt ist.

In dem Kassettendeckel 32.2 sind entsprechend der Anordnung der LEDs 31 drei mal drei Durchtrittsöffnungen 32.3 ausgebildet, durch die sich ebenfalls jeweils eine Faseroptik 31' aus Lichtleitfasern erstreckt. Die Faseroptiken 31' in den Durchtrittsöffnungen 32.3 des Kassettendeckels 32.2 und in den Durchtrittsöffnungen 36' der Isolatorplatte 36 stehen in Kontakt. Alternativ dazu kann sich eine Faseroptik 31' aus Lichtleitfasern durchgehend durch die Durchtrittsöffnung 32.3 in dem Kassettendeckel 32.2 und durch die Durchtrittsöffnung 36' in der Isolatorplatte 36 erstrecken. Auf der anderen Seite liegt der Kassettendeckel 32.2 an einer transparenten Scheibe 32.4 an, die mit Abstand zu der Platine 39 mit den LEDs 31 in das Kassettengehäuse 32.1 eingesetzt und mittels einer umlaufenden Dichtung 32.6 abgedichtet ist. Eine auf der Platine 39 angeordnete Abstandshalterplatte 32.5 hat Durchtrittsöffnungen zur Aufnahme der LEDs 31, um den Abstrahlwinkel der emittierten Strahlung zu begrenzen, sodass die emittierte Strahlung jeder LED 31 auf die Faseroptik 31' in der jeweils zugeordneten Durchtrittsöffnung 32.3 trifft.

Der elektrische Anschluss der Platine 39 mit den LEDs 31 erfolgt von der Rückseite des Lichtmoduls 30, d. h. der Seite, die von dem Griff 38 und den Anschlüssen 34 abgewandt ist. Die Kassette 32 ist dazu an der Rückseite mit einer Art Stecker ausgebildet, der bei Anordnung der Kassette 32 in dem dazu vorgesehenen Fach des Lichtmoduls 30 mit einer passenden Buchse in Eingriff tritt, die in dem Fach entsprechend angeordnet ist.

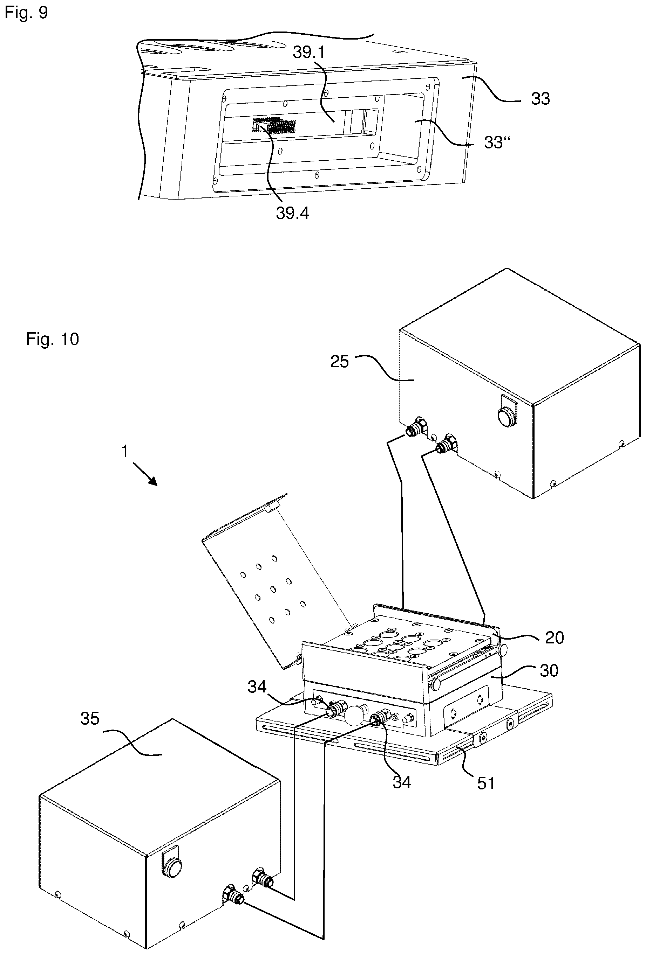

In **Fig. 7** ist zu sehen, dass das Gehäuse 33 des Lichtmoduls 30 an der Rückseite eine Abdeckplatte 33' aufweist, die eine in dem Gehäuse 33 ausgebildete Anschlusskammer 33" schließt. Die Anschlusskammer 33" weist an der Innenwand einen Durchbruch zu dem Kassettenfach auf. Ein an der Abdeckplatte 33' bereitgestelltes Anschlusselement 39' gestattet über eine Klemmleiste 39.3 den Anschluss einer Buchsenplatine 39.2, die mit der Klemmleiste 39.3 in der Anschlusskammer 33" angeordnet ist. Die Buchsenplatine 39.2 ist an der Innenwand der Anschlusskammer 33" den Durchbruch verschließend angeordnet. Dabei erstreckt sich von der Buchsenplatine 39.2 die Pin-Buchse einer Pin-Steckerverbindung 39.4 durch den Durchbruch in der Innenwand der Anschlusskammer 33", wie in **Fig. 9** zu sehen, die die Anschlusskammer 33" an der Rückseite des Gehäuses 33 ohne Abdeckplatte 33', Klemmleiste 39.3 und Buchsenplatine 39.2 zeigt. Der Pin-Stecker der Pin-Steckerverbindung 39.4 ist mit einer Steckerplatine 39.1 verbunden, die von außen an der Rückseite der Kassette 32 bzw. des Kassettengehäuses 32.1 angebracht ist. Die Platine 39 ist über einen Leiterplattensteckverbinder (nicht dargestellt) mit der Steckerplatine 39 verbunden, wobei sich der Leiterplattensteckverbinder durch einen Durchbruch erstreckt, der in der Rückwand des Kassettengehäuses 32.1 ausgebildet ist und von der Steckerplatine 39 flüssigkeitsdicht verschlossen wird.

### BEZUGSZEICHENLISTE

- 1: Vorrichtung
- 4: Küvetten
- 10: Steuerungseinheit
- 11: Verbindungsleitung
- 20: Aufnahmebehälter
- 21, 21': Aufnahmeöffnungen
- 22: Platte
- 23, 23': Deckel, Durchgangsöffnung
- 24, 24': Anschlüsse erste Temperiereinrichtung, Anschlussöffnungen
- 24": Temperierkanal
- 25: Wärme-/Kältequelle erste Temperiereinrichtung
- 26: Dichtungsplatte
- 27, 27': Sicherheitsschalter, Schaltgeber
- 30: Lichtmodul
- 31, 31': lichtemittierendes Halbleiterbauelement bzw. LED, Faseroptik
- 32, 32': Kassette, Rippen
- 32.1, 32.2: Kassettengehäuse, Kassettendeckel
- 32.3, 32.4: Durchtrittsöffnung, transparente Scheibe
- 32.5, 32.6: Abstandshalterplatte, Dichtung
- 33, 33', 33": Gehäuse, Abdeckplatte, Anschlusskammer
- 34, 34': Anschlüsse zweite Temperiereinrichtung, Temperierkanal
- 35: Wärme-/Kältequelle zweite Temperiereinrichtung
- 36, 36': Trenn-/Isolatorplatte, Öffnung
- 37, 37': Scheibe, O-Ring
- 38: Griff
- 39, 39': Platte/Platine, Anschlusselement
- 39.1, 39.2: Steckerplatine, Buchsenplatine
- 39.3, 39.4: Klemmleiste, Pin-Steckerverbindung
- 50: Rüttelvorrichtung
- 51: Rüttelplatte
- 52: Steuerungsgerät Rüttelvorrichtung
- 53: Halterung/Winkelplatten
- 61,62: Temperatursensoren

## Patentansprüche

1. Vorrichtung (1) zur Bestimmung von optimalen Reaktionsparametern einer photochemischen Reaktion in photoreaktiven Substanzproben,
wobei die Vorrichtung (1)
- einen Aufnahmebehälter (20) mit einer Haltervorrichtung, die eine Anordnung aus Aufnahmeöffnungen (21, 21') für Küvetten (4) aufweist, und mit einer ersten Temperiereinrichtung, die dazu ausgebildet ist, die in den Aufnahmeöffnungen (21, 21') des Aufnahmebehälters (20) anordenbaren Küvetten (4) auf eine vorbestimmte erste Temperatur zu temperieren,
- ein Lichtmodul (30) mit einer Anordnung aus lichtemittierenden Halbleiterbauelementen (31), die dazu ausgebildet ist, die Küvetten (4) zu bestrahlen, und mit einer zweiten Temperiereinrichtung zum Temperieren der lichtemittierenden Halbleiterbauelemente (31) auf eine vorbestimmte zweite Temperatur, sowie
- eine Steuerungseinheit (10) der lichtemittierenden Halbleiterbauelemente (31), die zumindest mit der zweiten Temperiereinrichtung verbunden ist,
aufweist,
wobei der Aufnahmebehälter (20) und das Lichtmodul (30) derart zueinander angeordnet sind, dass jede Aufnahmeöffnung (21, 21') aus der Anordnung der Aufnahmeöffnungen (21, 21') mit einem der lichtemittierenden Halbleiterbauelemente (31) aus der Anordnung der lichtemittierenden Halbleiterbauelementen (31) korrespondiert, sodass von jedem lichtemittierenden Halbleiterbauelementen (31) emittiertes Licht durch die korrespondierende Aufnahmeöffnung (21, 21') verläuft.

2. Vorrichtung (1) nach Anspruch 1,
**dadurch gekennzeichnet, dass**
das Lichtmodul (30) zumindest eine Fluidleitung (34') zur Durchströmung mit einem Temperierfluid aufweist, das in einem Temperierkreislauf geführt wird, der die zweite Temperiereinrichtung bereitstellt.

3. Vorrichtung (1) nach Anspruch 1,
**dadurch gekennzeichnet, dass**
das Lichtmodul (30) an seiner von dem Aufnahmebehälter (20) abgewandten Seite mit einer Kühlplatte verbunden ist, die die zweite Temperiereinrichtung bereitstellt.

4. Vorrichtung (1) nach Anspruch 2,
**dadurch gekennzeichnet, dass**
das Lichtmodul (30) einen Emissionsraum begrenzt, in dem die Anordnung der lichtemittierenden Halbleiterbauelementen (31) angeordnet ist, und zumindest eine mit dem Emissionsraum optisch verbundene Öffnung (36') aufweist, die dem Aufnahmebehälter (20) zugewandt ist, wobei die Öffnung (36') abdichtend durch eine für das Licht der lichtemittierenden Halbleiterbauelemente (31) transparente Scheibe (37) geschlossen ist, wobei die lichtemittierenden Halbleiterbauelemente (31) an einer Fläche des Emissionsraums angeordnet sind, die der Scheibe (37) gegenüber liegt, wobei der Emissionsraum zur Durchströmung mit dem Temperierfluid mit der zumindest einen Fluidleitung (34') verbunden ist.

5. Vorrichtung (1) nach zumindest einem der Ansprüche 1 bis 4,
**dadurch gekennzeichnet, dass**
die erste Temperiereinrichtung des Aufnahmebehälters (20) zumindest ein in dem Aufnahmebehälter (20) angeordnetes Temperierelement oder eine separate Wärmequelle oder Wärmesenke aufweist, die mit dem Aufnahmebehälter (20) einen Temperierkreislauf mit einem zirkulierenden Temperierfluid bildet,
wobei die erste Temperiereinrichtung dazu ausgebildet ist, in den in den Aufnahmeöffnungen (21, 21') des Aufnahmebehälters (20) anordenbaren Küvetten (4) eine vorbestimmte erste Temperatur, die in einem Temperaturbereich von -25 °C bis +180 °C, bevorzugt in einem Temperaturbereich von -20 °C bis +150 °C liegt, bereitzustellen.

6. Vorrichtung (1) nach zumindest einem der Ansprüche 1 bis 5,
**dadurch gekennzeichnet, dass**
- der Aufnahmebehälter (20) mit der Haltervorrichtung, die die Anordnung aus Aufnahmeöffnungen (21) für Küvetten (4) aufweist, über dem Lichtmodul (30) angeordnet ist, oder
- das Lichtmodul (30) über dem Aufnahmebehälter (20) angeordnet ist, wobei zwischen dem Aufnahmebehälter (20) und dem Lichtmodul (30) eine thermisch isolierende Trennplatte (36) angeordnet ist.

7. Vorrichtung (1) nach zumindest einem der Ansprüche 1 bis 6,
**dadurch gekennzeichnet, dass**
die lichtemittierenden Halbleiterbauelemente (31) Licht mit Wellenlängen in einem Bereich von 250 nm bis 650 nm emittieren, wobei zumindest zwei Halbleiterbauelemente (31) Licht der gleichen Wellenlänge emittieren oder jedes Halbleiterbauelement (31) Licht unterschiedlicher Wellenlänge emittiert,
und/oder
die Lichtintensität jedes lichtemittierenden Halbleiterbauelements (31) mittels der Steuerungseinheit (10) einstellbar ist.

8. Vorrichtung (1) nach zumindest einem der Ansprüche 1 bis 7,
**dadurch gekennzeichnet, dass**
das Lichtmodul (30) ein Gehäuse (33) und eine Kassette (32) aufweist, die lösbar in dem Gehäuse (33) anordenbar ist und in der die Anordnung aus lichtemittierenden Halbleiterbauelementen (31) angeordnet ist.

9. Vorrichtung (1) nach Anspruch 8,
**dadurch gekennzeichnet, dass**
die Kassette (32) die zumindest eine Fluidleitung (34') aufweist, die mit dem Emissionsraum verbunden ist, in dem die Anordnung der lichtemittierenden Halbleiterbauelemente (31) angeordnet ist,
und/oder
eine Verbindung der lichtemittierenden Halbleiterbauelemente (31) mit einem Anschlusselement (39') an dem Gehäuse (33) durch eine lösbare Steckerverbindung (39.4) zwischen der Kassette (32) und dem Gehäuse (33) bereitgestellt wird.

10. Vorrichtung (1) nach zumindest einem der Ansprüche 1 bis 9,
**dadurch gekennzeichnet, dass**
der Aufnahmebehälter (20) und das Lichtmodul (30) jeweils zumindest einen Temperatursensor (61, 62) aufweisen, der mit der Steuerungseinheit (10) operativ gekoppelt ist, die mit der ersten Temperiereinrichtung des Aufnahmebehälters (20) verbunden ist.

11. Vorrichtung (1) nach zumindest einem der Ansprüche 1 bis 10,
**dadurch gekennzeichnet, dass**
die Vorrichtung (1) eine Rüttelplatte (51) aufweist, auf der der Aufnahmebehälter (20) und das Lichtmodul (30) angeordnet sind, wobei die Rüttelplatte (51) mittels der Steuerungseinheit (10) betätigbar ist.

12. Vorrichtung (1) nach zumindest einem der Ansprüche 1 bis 11,
**dadurch gekennzeichnet, dass**
der Aufnahmebehälter (20) einen Deckel (23) aufweist, der zumindest teilweise geschlossen ist oder der Durchgangsöffnungen (23') zur Probenentnahme aus den Küvetten (4) aufweist.

13. Verfahren zum Betreiben einer Vorrichtung (1) zur Bestimmung von optimalen Reaktionsparametern einer photochemischen Reaktionen in photoreaktiven Substanzproben unter Verwendung einer Vorrichtung (1) nach zumindest einem der Ansprüche 1 bis 12,
wobei die Vorrichtung (1):
- einen Aufnahmebehälter (20) mit einer Haltervorrichtung, die eine Anordnung aus Aufnahmeöffnungen (21, 21') für Küvetten (4) aufweist, und mit einer ersten Temperiereinrichtung, die dazu ausgebildet ist, die in den Aufnahmeöffnungen (21, 21') des Aufnahmebehälters (20) anordenbaren Küvetten (4) auf eine vorbestimmte erste Temperatur zu temperieren,
- ein Lichtmodul (30) mit einer Anordnung aus lichtemittierenden Halbleiterbauelementen (31), die dazu ausgebildet sind, die in den Aufnahmeöffnungen (21, 21') des Aufnahmebehälters (20) anordenbaren Küvetten (4) zu bestrahlen, und mit einer zweiten Temperiereinrichtung zum Temperieren der lichtemittierenden Halbleiterbauelemente (31) auf eine vorbestimmte zweite Temperatur, sowie
- eine Steuerungseinheit (10) der lichtemittierenden Halbleiterbauelemente (31), die zumindest mit der zweiten Temperiereinrichtung verbunden ist, aufweist, umfassend die Schritte
- Einsetzen von Küvetten (4) in die Aufnahmeöffnungen (21, 21') der Haltervorrichtung des Aufnahmebehälters (20), zuvor oder danach Befüllen der Küvetten (4) mit Proben photoreaktiver Substanzen,
- Temperieren der Küvetten (4) mittels der ersten Temperiereinrichtung auf die vorbestimmte erste Temperatur,
- Bestrahlen der Küvetten (4) und damit der Proben photoreaktiver Substanzen mittels der lichtemittierenden Halbleiterelemente (31) des Lichtmoduls (30),
- dabei in Abhängigkeit der vorbestimmten ersten Temperatur Temperieren der lichtemittierenden Halbleiterelemente (31) mit der zweiten Temperiereinrichtung auf die vorbestimmte zweite Temperatur.

14. Verfahren nach Anspruch 13,
wobei
die Steuerungseinheit (10) die lichtemittierenden Halbleiterbauelemente (31), die Strahlung unterschiedlicher Wellenlängen in dem Bereich von 250 nm bis 650 nm emittieren, derart ansteuert, dass durch Anpassung der Aufnahmeleistung der lichtemittierenden Halbleiterbauelemente (31) in Abhängigkeit eines wellenlängenabhängigen Wirkungsgrads eine gleiche Bestrahlungsintensität eingestellt wird.
